Europäisches Patentamt

European Patent Office

Office européen des brevets

(19)

(11) EP 0 925 541 B1

(12) **EUROPÄISCHE PATENTSCHRIFT**

(45) Veröffentlichungstag und Bekanntmachung des Hinweises auf die Patenterteilung:
**04.04.2001 Patentblatt 2001/14**

(21) Anmeldenummer: 97935429.7

(22) Anmeldetag: **15.07.1997**

(51) Int Cl.⁷: **G06F 15/80**

(86) Internationale Anmeldenummer:
**PCT/DE97/01497**

(87) Internationale Veröffentlichungsnummer:
**WO 98/10352 (12.03.1998 Gazette 1998/10)**

(54) **VERFAHREN UND VORRICHTUNG ZUR RECHNERGESTÜTZTEN GENERIERUNG MINDESTENS EINES KÜNSTLICHEN TRAININGSDATENVEKTORS FÜR EIN NEURONALES NETZ**

METHOD AND DEVICE FOR COMPUTER ASSISTED GENERATION OF AT LEAST ONE ARTIFICIAL TRAINING DATA VECTOR FOR A NEURONAL NETWORK

DISPOSITIF ET PROCEDE DE PRODUCTION ASSISTEE PAR ORDINATEUR D'AU MOINS UN VECTEUR DE DONNEES D'ENTRAINEMENT ARTIFICIEL POUR UN RESEAU NEURONAL

(84) Benannte Vertragsstaaten:
**DE FR GB**

(30) Priorität: **03.09.1996 DE 19635758**

(43) Veröffentlichungstag der Anmeldung:
**30.06.1999 Patentblatt 1999/26**

(73) Patentinhaber: **SIEMENS AKTIENGESELLSCHAFT**
**80333 München (DE)**

(72) Erfinder:
• **NEUNEIER, Ralf**
**D-80469 München (DE)**
• **ZIMMERMANN, Hans-Georg**
**D-82319 Starnberg (DE)**

(56) Entgegenhaltungen:
**WO-A-95/11486          US-A- 5 359 699**

• **SUNGZOON CHO ET AL: "Evolution of neural network training set through addition of virtual samples" PROCEEDINGS OF 1996 IEEE INTERNATIONAL CONFERENCE ON EVOLUTIONARY COMPUTATION (ICEC'96) (CAT. NO.96TH8114), PROCEEDINGS OF IEEE INTERNATIONAL CONFERENCE ON EVOLUTIONARY COMPUTATION, NAGOYA, JAPAN, 20-22 MAY 1996, ISBN 0-7803-2902-3, 1996, NEW YORK, NY, USA, IEEE, USA, Seiten 685-688, XP002048950**
• **DATUM M S ET AL: "An artificial neural network for sound localization using binaural cues" JOURNAL OF THE ACOUSTICAL SOCIETY OF AMERICA, JULY 1996, ACOUST. SOC. AMERICA THROUGH AIP, USA, Bd. 100, Nr. 1, ISSN 0001-4966, Seiten 372-383, XP002048951**
• **SLICHER A W R ET AL: "An innovative approach to training neural networks for strategic management of construction firms" DEVELOPMENTS IN NEURAL NETWORKS AND EVOLUTIONARY COMPUTING FOR CIVIL AND STRUCTURAL ENGINEERING, DEVELOPMENTS IN NEURAL NETWORKS AND EVOLUTIONARY COMPUTING FOR CIVIL AND STRUCTURAL ENGINEERING, CAMBRIDGE, UK, 28-30 AUG. 1995, ISBN 0-948749-36-9, 1995, EDINBURGH, UK, CIVIL-COMP PRESS, UK, Seiten 87-93, XP002048952**

**Beschreibung**

Neuronale Netze lernen mit Hilfe von Trainingsdaten. Die Trainingsdaten sind in vielen Anwendungsgebieten sehr verrauscht, beispielsweise bei der Modellierung von Finanzdaten wie Aktien- oder Währungskursen. Somit erhalten die Trainingsdaten zufällige Störungen, die nichts mit der eigentlich zu modellierenden Systemdynamik zu tun haben.

Durch die Approximationsfähigkeit der neuronalen Netze kann aber auch die transiente Struktur des zufälligen Rauschens gelernt werden. Dieses Phänomen wird als Übertrainieren des neuronalen Netzes bezeichnet. Durch ein übertrainiertes neuronales Netz wird in sehr verrauschten Systemen der Lernvorgang des neuronalen Netzes erheblich behindert, da die Verallgemeinerungsfähigkeit des neuronalen Netzes negativ beeinflußt wird.

Dieses Problem gewinnt in Anwendungsgebieten an Bedeutung, in denen nur eine geringe Anzahl von Trainingsdatenvektoren zur Adaption des neuronalen Netzes an die Anwendung, d.h. die zu modellierende, durch die Trainingsdatenvektoren repräsentierte Funktion, verfügbar ist.

Vor allen in diesen Anwendungsgebieten, aber auch allgemein in einem Trainingsverfahren eines neuronalen Netzes ist es vorteilhaft, zusätzliche Trainingsdatenvektoren künstlich zu generieren, um somit eine größere Trainingsdatenmenge zu erhalten.

Es ist bekannt, die Generierung der künstlichen Trainingsdatenvektoren durch Verrauschen der verfügbaren Trainingsdatenvektoren der Trainingsdatenmenge durchzuführen. Es ist in diesem Zusammenhang aus dem Dokument [1] bekannt, die Trainingsdatenmenge mit gaußförmigem Rauschen mit dem Mittelwert 0 und einer Varianz $\sigma$, die für alle Eingänge des neuronalen Netzes auf den gleichen Wert gesetzt wird, zu ermitteln.

Aus [5] ist eine weitere Vorgehensweise zur Generierung künstlicher Trainingsdaten bekannt, bei dem die künstlichen Trainingsdaten in einem Hyperraum gleichmäßig verteilt werden sollen.

Aus [4] ist es bekannt, Trainingsdaten durch Einführung zusätzlichen Rauschens zu generieren. Dabei ist es bekannt, die sogenannte Jackknife-Prozedur einzusetzen.

Dieses Verfahren weist jedoch einige Nachteile auf.

Dadurch, daß zur Generierung der zusätzlichen Trainingsdatenvektoren als statistische Verteilung, die zur Generierung verwendet wird, ein gaußförmiges Rauschen mit einer Varianz verwendet wird, die für alle Eingänge des neuronalen Netzes auf den gleichen Wert gesetzt wird, werden Trainingsdatenvektoren neu generiert, die keinerlei Aussage über das zu modellierende System enthalten. Die Trainingsdatenvektoren enthalten ferner keinerlei Information über das tatsächliche, dem System zugrundeliegende Rauschen. Somit wird zwar die Trainingsdatenmenge vergrößert, diese muß aber nicht den Lernvorgang unterstützen, da ein fest vorgegebenes Rauschen, das mit der eigentlichen Systemdynamik nichts zu tun hat, zum Trainieren des neuronalen Netzes verwendet wird. Damit kann es dann trotzdem zum Übertrainieren kommen.

Grundlagen über neuronale Netze sind beispielsweise aus dem Dokument [2] bekannt.

Grundlagen über Verwendung der neuronalen Netze in der Ökonomie sind beispielsweise aus dem Dokument [3] bekannt.

Somit liegt der Erfindung das Problem zugrunde, künstlich neue Trainingsdatenvektoren für ein neuronales Netz zu bilden, wobei jedoch ein Übertrainieren des neuronalen Netzes vermieden wird.

Das Problem wird durch das Verfahren gemäß Patentanspruch 1 sowie durch die Vorrichtung gemäß Patentanspruch 9 gelöst.

Bei dem Verfahren wird nach dem Training des neuronalen Netzes mit verfügbaren Trainingsdatenvektoren einer Trainingsdatenmenge ein Restfehler ermittelt. Aus dem Restfehler wird beispielsweise unter Verwendung eines GradientenabstiegsVerfahren ein eingangsbezogener Rückwärtsfehler ermittelt. Die Ermittlung des Rückwärtsfehlers entspricht der üblichen Vorgehensweise während des Trainings eines neuronalen Netzes zur Adaption der einzelnen Gewichte des neuronalen Netzes. Ist der eingangsbezogene Rückwärtsfehler ermittelt worden, wird unter Berücksichtigung des jeweiligen Rückwärtsfehlers eine dem jeweiligen Eingang zugeordnete statistische Verteilung generiert, und der künstliche Trainingsdatenvektor wird unter Berücksichtigung der jeweiligen statistischen Verteilung an den Eingängen des neuronalen Netzes erzeugt.

Mit diesem Verfahren ist es möglich, zusätzliche Trainingsdatenvektoren zu generieren, die eine Information über das neuronale Netz und die Struktur des neuronalen Netzes aktuell nach dem Training des neuronalen Netzes mit den verfügbaren Traindingsdatenvektoren enthalten.

Dies führt dazu, daß die künstlich erzeugten Trainingsdatenvektoren von dem Rückwärtsfehler, der nach dem Training des neuronalen Netzes noch existiert, abhängig sind und somit von der Performanz des neuronalen Netzes abhängen. Dies führt dazu, daß die erzeugten Trainingsdatenvektoren Information über das zu modellierende System enthalten. Auf diese Weise kann ein Übertrainieren des neuronalen Netzes durch die zusätzlichen Trainingsdatenvektoren vermieden werden.

Die Vorrichtung gemäß Patentanspruch 9 weist eine Recheneinheit auf, die derart eingerichtet ist, daß die oben beschriebenen Verfahrensschritte durchgeführt werden.

Vorteilhafte Weiterbildungen der Erfindung ergeben sich aus den abhängigen Ansprüchen.

Es ist vorteilhaft, bei einer Online-Approximation des neuronalen Netzes, die auch als Online-Training bezeichnet wird, auch die jeweilige statistische Verteilung dem veränderten Trainingsdatensatz anzupassen. Dadurch wird das zu modellierende System noch genauer durch das neuronale Netz modelliert.

In den Figuren ist ein Ausführungsbeispiel der Erfindung dargestellt, welches im weiteren näher erläutert wird.

Es zeigen

Fig. 1 ein Ablaufdiagramm, in dem die einzelnen Verfahrensschritte des Verfahrens dargestellt sind;

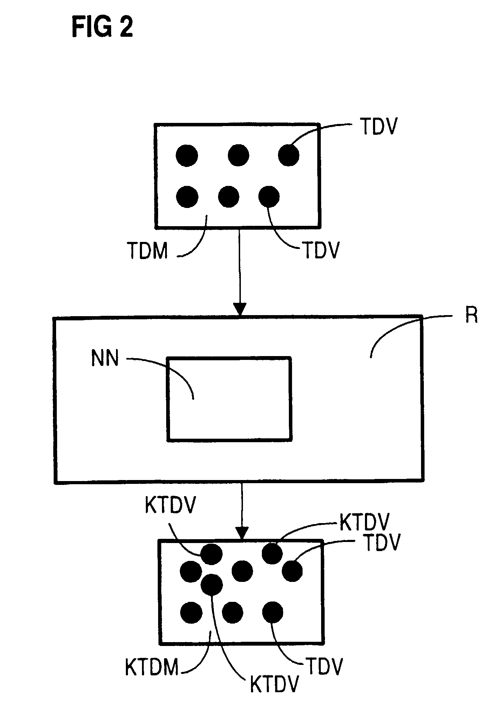

Fig. 2 eine Skizze, in der eine Rechneranordnung dargestellt ist, mit der das Verfahren durchgeführt werden kann.

## 5. Figurenbeschreibung

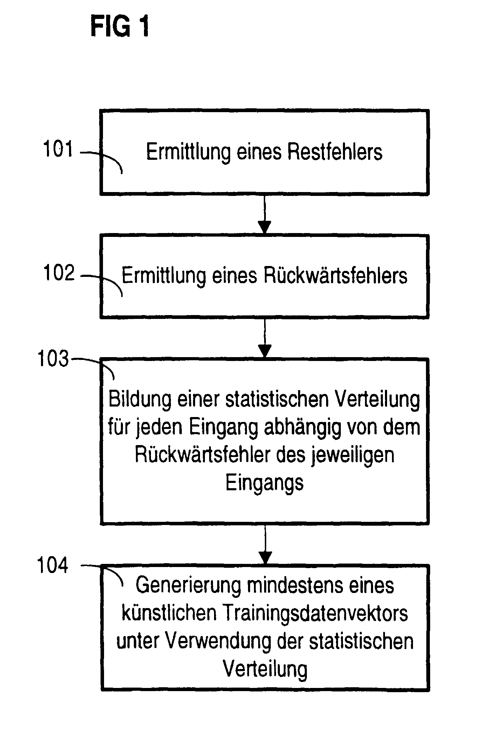

In Fig. 1 sind die einzelnen Verfahrensschritte des Verfahrens dargestellt.

In einem ersten Schritt (101) wird nach abgeschlossenem Training des neuronalen Netzes NN mit einer beliebigen Anzahl von Trainingsdatenvektoren TDVi einer Trainingsdatenmenge TDM von einem Rechner R ein Restfehler RE ermittelt.

Der Restfehler RE wird beispielsweise bei m Trainingsdatenvektoren TDV mit den Trainingsdatenvektoren TDV zugeordneten Sollwerten $t_i$, wobei mit einem Index i jeweils der Trainingsdatenvektor TDVi eindeutig gekennzeichnet wird, auf folgende Weise ermittelt:

$$RE = \sum_{i=1}^{m} \left( t_i - y_i \right)^2 \qquad (1).$$

Es kann jedoch selbstverständliche jede beliebige andere Vorschrift zur Bildung des Restfehlers RE nach dem Training des neuronalen Netzes NN verwendet werden.

Nach Ermittlung des Restfehlers wird ein Rückwärtsfehler RFj ermittelt (102). Die Bestimmung des Rückwärtsfehlers RF kann beispielsweise unter Verwendung eines Gradientenabstiegs-Verfahrens nach den Eingangssignalen der neuronalen Netze NN erfolgen.

Im weiteren wird folgende Nomenklatur für den Trainingsdatenvektor TDVi, sowie die Eingangsdaten des neuronalen Netzes NN, die sich aus den Trainingsdatenvektoren TDVi und einem Rauschtermvektor $\underline{e}$ ergeben, verwendet:

Trainingsdatenvektor TDVi:     $\underline{x} = (x_1, ..., x_j, ..., x_n)$

Rauschtermvektor:     $\underline{e} = (e_1, ..., e_j, ..., e_n)$

Mit n wird eine Anzahl von Komponenten der Trainingsdatenvektoren TDVi, der Rauschtermvektoren $\underline{e}$ bzw. der Eingangsdatenvektoren $\underline{z}$ bezeichnet.

Der Rückwärtsfehler RFj wird für jeden Eingang j des neuronalen Netzes NN individuell ermittelt, wobei mit einem Index j jeweils eine Komponente des Eingangsdatenvektors $\underline{z}$ bzw. ein Eingang des neuronalen Netzes NN eindeutig bezeichnet wird,.

Dies erfolgt beispielsweise nach dem bekannten Gradientenabstiegs-Verfahren zum Trainieren des neuronalen Netzes NN. Somit ergibt sich der Rückwärtsfehler RF des Eingangsdatenvektors $\underline{z}$ aus den jeweiligen partiellen Ableitungen des Restfehlers RE nach den einzelnen Eingangssignalen $z_j$.

$$RFj = \frac{\partial RE^t}{\partial z_j^t} \qquad (2).$$

Mit dem Symbol t wird jeweils ein Zeitpunkt eindeutig gekennzeichnet, zu dem die Ermittlung des Rückwärtsfehlers RFj erfolgt.

Unter Berücksichtigung des Rückwärtsfehlers RFj wird nun in einem dritten Schritt (103) eine statistische Verteilung $S_j$ für jeden Eingang j des neuronalen Netzes NN gebildet.

Als statistische Verteilung $S_j$ kann allgemein jede beliebige statistische Verteilung zur Beschreibung eines Zufallsprozesses verwendet werden.

Im folgenden werden zur einfacheren Darstellung jedoch nur eine uniforme statistische Verteilung und eine gaußförmige statistische Verteilung $S_j$ näher erläutert.

Für die uniforme Verteilung ergibt sich eine uniforme Verteilungsbreite $s_j^t$ beispielsweise nach folgender Vorschrift:

$$s_j^t \; = \; \frac{1}{t} \sum_{k=1}^{t} \left| \frac{\partial RE^k}{\partial z_j^k} \right| \qquad\qquad (3).$$

Der Rauschterm $e_j^t$, der zur Bildung mindestens eines künstlichen Trainingsdatenvektors KTDV verwendet wird, liegt im Bereich des Intervalls:

$$e_j^t \in \left[ -s_j^t , s_j^t \right] \qquad\qquad (4).$$

Bei einer gaußförmigen Verteilung ergibt sich die Rauschbreite $s_j^t$ nach der folgenden Vorschrift:

$$s_j^t \; = \; \frac{1}{t} \sum_{k=1}^{t} \left( \frac{\partial RE^k}{\partial z_j^k} \right)^2 \qquad\qquad (5).$$

Der Rauschterm $e_j^t$ ergibt sich für diesen Beispielsfall nach folgender Vorschrift:

$$e_j^t \in N\left( 0, \; \sqrt{s_j^t} \right) \qquad\qquad (6).$$

Mit

$$N\left( 0, \; \sqrt{s_j^t} \right)$$

wird ein normal verteilter Zufallsprozeß mit einem Mittelwert 0 und der Standardabweichung $\sqrt{s_j^t}$ bezeichnet.

Unter Verwendung der jeweiligen statistischen Verteilung $S_j$ wird der mindestens eine künstliche Trainingsdatenvektor KTDV generiert (104).

Anschaulich bedeutet dies, daß der künstliche Trainingsdatenvektor KTDV durch den jeweils durch die statistische Verteilung $S_j$ beschriebenen Zufallsprozeß generiert wird.

Durch diese Vorgehensweise haben die künstlichen Trainingsdatenvektoren KTDV statistisch die gleichen Eigenschaften wie die original verfügbaren Trainingsdatenvektoren TDVi.

Dies kann durch Verrauschen mit einem einheitlichen Rauschprozeß, wie dieser aus dem Dokument [1] bekannt ist, nicht erreicht werden.

Anschaulich läßt sich das Verfahren folgendermaßen beschreiben. Die Eingangsdaten, repräsentiert durch die original verfügbaren Trainingsdatenvektoren TDVi, werden mit einem Zufallsprozeß verrauscht, der für jeden Eingang abhängig ist von der jeweiligen Gradienten-Fehlerfunktion nach den Eingangssignalen.

Die jeweilige Rauschbreite $s_j^t$ kann anschaulich folgendermaßen interpretiert werden:

- Kleine Werte von $S_j^t$ werden durch Eingänge erzeugt, die eine gute Abbildung auf die Trainingsdaten erzeugen.

- Kleine Werte der Rauschbreite $s_j^t$ können aber auch auf unwichtige, für das Training des neuronalen Netzes NN nicht relevante Eingänge hinweisen.

In beiden Fällen ist es im Sinne der Aufgabe, daß kein oder nur wenig Rauschen zu den ursprünglich vorhandenen Trainingsdatenvektoren TDVi hinzugefügt wird.

- Große Werte der Rauschbreite $S_j^t$ deuten darauf hin, daß der Eingang j erhebliche Bedeutung aufweist, aber das neuronale Netz NN bisher nicht in der Lage ist, eine adäquate Abbildung zu lernen.

- Rauschen auf Eingängen mit einer großen Rauschbreite $s_j^t$ "versteift" das neuronale Netz NN, wodurch ein Übertrainieren verhindert wird, was zu einer besseren Verallgemeinerungsfähigkeit des neuronalen Netzes NN führt.

Dieses Verfahren kann besonders vorteilhaft in Anwendungssituationen verwendet werden, in denen nur eine relativ geringe Anzahl von Trainingsdatenvektoren TDVi zum Trainieren des neuronalen Netzes NN verfügbar ist.

Durch das Verfahren kann die Trainingsdatenmenge TDM künstlich erheblich erweitert werden zu einer erweiterten Trainingsdatenmenge KTDM, ohne die eigentliche Systemdynamik zu verfälschen, da die statistischen Eigenschaften der Trainingsdatenmenge TDM auch in den künstlichen Trainingsdatenvektoren KTDV enthalten sind.

Eine typische Anwendungssituation des Verfahrens liegt in der Analyse von Finanzmärkten, beispielsweise von Aktienmärkten oder auch Wertpapiermärkten.

Wird zum Trainieren des neuronalen Netzes NN ein sog. Online-Lernverfahren eingesetzt, bei dem während der Generalisierungsphase des neuronalen Netzes NN weitere Trainingsdatenvektoren TDV ermittelt werden, mit denen das neuronale Netz NN in der Generalisierungsphase weiter trainiert wird, so ist es in einer Weiterbildung des Verfahrens vorgesehen, abhängig von der Änderung der Trainingsdatenmenge TDM, die durch die Trainingsdatenvektoren TDVi gebildet wird, auch die statistischen Verteilungen $S_j$ anzupassen. Dies kann beispielsweise für eine uniforme Verteilung nach folgender Vorschrift erfolgen:

$$S_j^{t+1} = (1 - \alpha) \cdot s_j^t + \alpha \cdot \left| \frac{\partial E^k}{\partial z_j^k} \right| \tag{7}$$

Für eine gaußförmige statistische Verteilung $S_j$ kann beispielsweise folgende Adaptionsvorschrift eingesetzt werden:

$$\left( s_j^{t+1} \right)^2 = (1 - \alpha) \cdot \left( s_j^t \right)^2 + \alpha \cdot \left( \frac{\partial E^k}{\partial z_j^k} \right)^2 \tag{8}$$

Mit $\alpha$ wird ein Adaptionsfaktor bezeichnet.

Es hat sich als vorteilhaft herausgestellt, als Wert für den Adaptionsfaktor $\alpha$ den Kehrwert der Anzahl der Trainingsdatenvektoren TDVi zu verwenden.

Im Rahmen dieses Dokumentes wurden folgende Veröffentlichungen zitiert:

[1] C. M. Bishop, Neural Networks for Pattern Recognition, Clarendon Press, Oxford, U. K., ISBN 0-19-853864-2, S. 346 - 349, 1994

[2] G. Deco und D: Obradovic, An Information-Theoretic Approach to Neural Computing, Springer Verlag, New York, USA, ISBN 0-387-94666-7, S. 23 - 37, 1996

[3] H. Zimmermann und Rehkugler, Neuronale Netze in der Ökonomie, Kapitel 1, Neuronale Netze als Entscheidungskalkül, Vahlen Verlag, München, ISBN 3-8006-1871-0, S. 3 - 20, 1994

[4] L. Holmström und P. Koistinen, Using Additive Noise in Back-Propagation Training, IEEE Transactions on Neural Networks, Vol. 3, No. 1, S. 24 - 38, Januar 1992

[5] US 5,359,699

**Patentansprüche**

1. Verfahren zur rechnergestützten Generierung mindestens eines künstlichen Trainingsdatenvektors (KDTV) für ein Neuronales Netz (NN),

    - bei dem ein Restfehler (RE) nach einem Training des Neuronalen Netzes (NN) mit Trainingsdatenvektoren (TDVi) einer Trainingsdatenmenge (TDM) ermittelt wird (101),
    - bei dem aus dem Restfehler (RE) für mindestens einen Eingang (j) des Neuronalen Netzes (NN) ein Rückwärtsfehler (RFj) ermittelt wird (102),
    - bei dem jeweils eine dem Eingang (j) zugeordnete statistische Verteilung ($S_j$) generiert wird, die von der Größe des jeweiligen Rückwärtsfehlers (RFj) abhängig ist (103),
    - bei dem der künstliche Trainingsdatenvektor (KDTV) generiert wird unter jeweiliger Verwendung der dem Eingang (j) zugeordneten statistischen Verteilung ($S_j$) (104),

    wodurch die künstlichen Trainingsdatenvektoren (KDTV) statistisch die gleichen Eigenschaften wie die Trainingsdatenvektoren der Trainingsdatenmenge aufweisen.

2. Verfahren nach Anspruch 1,
    bei dem der Rückwärtsfehler (RFj) mit einem Gradientenabstiegsverfahren ermittelt wird.

3. Verfahren nach Anspruch 2,
    bei dem das Gradientenabstiegsverfahren mit einem Backpropagation-Verfahren realisiert wird.

4. Verfahren nach einem der Ansprüche 1 bis 3,
    bei dem die statistische Verteilung ($S_j$) durch eine uniforme Verteilung gebildet wird, wobei eine Verteilungsbreite der uniformen Verteilung von dem Rückwärtsfehler (RFj) abhängig ist.

5. Verfahren nach einem der Ansprüche 1 bis 3,
    bei dem die statistische Verteilung ($S_j$) durch eine gaußförmige Verteilung gebildet wird, wobei eine Verteilungsbreite der gaußförmigen Verteilung von dem Rückwärtsfehler (RFj) abhängig ist.

6. Verfahren nach Anspruch 4 oder 5,
    bei dem bei einer Online-Approximation des Neuronalen Netzes (NN) nach einer beliebigen Anzahl neuer Trainingsdatenvektoren (TDVi) die statistische Verteilung ($S_j$) an einen neu ermittelten Rückwärtsfehler angepaßt wird.

7. Verfahren nach einem der Ansprüche 1 bis 6 eingesetzt zur Modellierung einer nichtlinearen Funktion, die mit einer geringen Anzahl von Trainingsdatenvektoren beschrieben wird.

8. Verfahren nach einem der Ansprüche 1 bis 6 eingesetzt in der Analyse eines Finanzmarktes.

9. Vorrichtung zur rechnergestützten Generierung mindestens eines künstlichen Trainingsdatenvektors (KDTV) für ein Neuronales Netz (NN),
    mit einer Recheneinheit, die derart eingerichtet ist, daß

    - ein Restfehler (RE) nach einem Training des Neuronalen Netzes (NN) mit Trainingsdatenvektoren (TDVi) einer Trainingsdatenmenge (TDM) ermittelt wird (101),
    - aus dem Restfehler (RE) für mindestens einen Eingang (j) des Neuronalen Netzes (NN) ein Rückwärtsfehler (RFj) ermittelt wird (102),
    - jeweils eine dem Eingang (j) zugeordnete statistische Verteilung ($S_j$) generiert wird, die von der Größe des jeweiligen Rückwärtsfehlers (RFj) abhängig ist (103),
- der künstliche Trainingsdatenvektor (KDTV) generiert wird unter jeweiliger Verwendung der dem Eingang (j) zugeordneten statistischen Verteilung ($S_j$) (104),

wodurch die künstlichen Trainingsdatenvektoren (KDTV) statistisch die gleichen Eigenschaften wie die Trainingsdatenvektoren der Trainingsdatenmenge aufweisen.

10. Vorrichtung nach Anspruch 9,
bei der die Recheneinheit derart eingerichtet ist, daß der Rückwärtsfehler (RFj) mit einem Gradientenabstiegsverfahren ermittelt wird.

11. Vorrichtung nach Anspruch 9 oder 10,
bei der die Recheneinheit derart eingerichtet ist, daß die statistische Verteilung ($S_j$) durch eine uniforme Verteilung gebildet wird, wobei eine Verteilungsbreite der uniformen Verteilung von dem Rückwärtsfehler (RFj) abhängig ist.

12. Vorrichtung nach einem der Ansprüche 9 bis 11,
bei der die Recheneinheit derart eingerichtet ist, daß die statistische Verteilung ($S_j$) durch eine gaußförmige Verteilung gebildet wird, wobei eine Verteilungsbreite der gaußförmigen Verteilung von dem Rückwärtsfehler (RFj) abhängig ist.

13. Vorrichtung nach Anspruch 11 oder 12,
bei der die Recheneinheit derart eingerichtet ist, daß bei einer Online-Approximation des Neuronalen Netzes (NN) nach einer beliebigen Anzahl neuer Trainingsdatenvektoren (TDVi) die statistische Verteilung ($S_j$) an einen neu ermittelten Rückwärtsfehler angepaßt wird.

14. Vorrichtung nach einem der Ansprüche 9 bis 13 eingesetzt zur Modellierung einer nichtlinearen Funktion, die mit einer geringen Anzahl von Trainingsdatenvektoren beschrieben wird.

15. Vorrichtung nach einem der Ansprüche 9 bis 13 eingesetzt in der Analyse eines Finanzmarktes.

**Claims**

1. Method for computer-aided generation of at least one artificial training data vector (KDTV) for a neural network (NN),

   - in which a residual error (RE) is determined (101) after training of the neural network (NN) with training data vectors (TDVi) from a training data set (TDM),
   - in which a backward error (RFj) is determined (102) from the residual error (RE) for at least one input (j) of the neural network (NN),
   - in which a statistical distribution ($S_j$) is generated in each case, which is assigned to the input (j) and depends (103) on the magnitude of the respective backward error (RFj),
   - in which the artificial training data vector (KDTV) is generated by respectively using the statistical distribution ($S_j$) (104) assigned to the input (j),

   as a result of which the artificial training data vectors (KDTV) statistically have the same properties as the training data vectors of the training data set.

2. Method according to Claim 1, in which the backward error (RFj) is determined with the aid of a gradient descent method.

3. Method according to Claim 2, in which the gradient descent method is implemented with the aid of a backpropagation method.

4. Method according to one of Claims 1 to 3, in which the statistical distribution ($S_j$) is formed by a uniform distribution, a distribution width of the uniform distribution depending on the backward error (RFj).

5. Method according to one of Claims 1 to 3, in which the statistical distribution ($S_j$) is formed by a Gaussian distribution, a distribution width of the Gaussian distribution depending on the backward error (RFj).

6. Method according to Claim 4 or 5, in which in the case of an online approximation of the neural network (NN) the statistical distribution ($S_j$) is adapted to a newly determined backward error after an arbitrary number of new training data vectors (TDVi).

7. Method according to one of Claims 1 to 6, as used to model a nonlinear function which is described with a small number of training data vectors.

8. Method according to one of Claims 1 to 6, as used in analysing a financial market.

9. Device for computer-aided generation of at least one artificial training data vector (KDTV) for a neural network (NN), having an arithmetic unit which is set up in such a way that

   - a residual error (RE) is determined (101) after training of the neural network (NN) with training data vectors (TDVi) from a training data set (TDM),
   - a backward error (RFj) is determined (102) from the residual error (RE) for at least one input (j) of the neural network (NN),
   - a statistical distribution ($S_j$) is generated in each case, which is assigned to the input (j) and depends (103) on the magnitude of the respective backward error (RFj).

10. Device according to Claim 9, in which the arithmetic unit is set up in such a way that the backward error (RFj) is determined with the aid of a gradient descent method.

11. Device according to Claim 9 or 10, in which the arithmetic unit is set up in such a way that the statistical distribution ($S_j$) is formed by a uniform distribution, a distribution width of the uniform distribution depending on the backward error (RFj).

12. Device according to one of Claims 9 to 11, in which the arithmetic unit is set up in such a way that the statistical distribution ($S_j$) is formed by a Gaussian distribution, a distribution width of the Gaussian distribution depending on the backward error (RFj).

13. Device according to Claim 11 or 12, in which the arithmetic unit is set up in such a way that in the case of an online approximation of the neural network (NN) the statistical distribution ($S_j$) is adapted to a newly determined backward error after an arbitrary number of new training data vectors (TDVi).

14. Device according to one of Claims 9 to 13, as used to model a nonlinear function which is described with a small number of training data vectors.

15. Device according to one of Claims 9 to 13, as used in analysing a financial market.

**Revendications**

1. Procédé pour la production assistée par ordinateur d'au moins un vecteur artificiel de données d'entraînement (KDTV) pour un réseau neuronal (NN)

   - au cours duquel on détermine (101) une erreur résiduelle (RE) après un entraînement du réseau neuronal (NN) avec des vecteurs de données d'entraînement ($TDV_i$) d'un ensemble de données d'entraînement (TDM),
   - au cours duquel on détermine (102), à partir de l'erreur résiduelle (RE), pour au moins une entrée (j) du réseau neuronal (NN), une erreur de retour ($RF_j$),
   - au cours duquel on génère (103) une répartition statistique $S_j$, qui correspond à l'entrée (j) et qui dépend de l'importance de l'erreur de retour ($RF_j$),
   - au cours duquel on génère (104) le vecteur artificiel de données d'entraînement (KDTV) en utilisant respectivement la répartition statistique ($S_j$), qui correspond à l'entrée (j),

   d'où il résulte que les vecteurs artificiels de données d'entraînement (KDTV) ont statistiquement les mêmes propriétés que les vecteurs de données d'entraînement de l'ensemble des données d'entraînement.

**2.** Procédé selon la revendication 1
au cours duquel l'erreur de retour ($RF_j$) est déterminée avec un procédé à dégression des gradients.

**3.** Procédé selon la revendication 2
au cours duquel le procédé à dégression des gradients est réalisé avec un procédé à propagation inversée (backpropagation).

**4.** Procédé selon l'une des revendications 1 à 3
au cours duquel la répartition statistique ($S_j$) est formée par une répartition uniforme, une largeur de la répartition uniforme dépendant de l'erreur de retour ($RF_j$).

**5.** Procédé selon l'une des revendications 1 à 3
au cours duquel la répartition statistique ($S_j$) est formée par une répartition additive gaussienne, une largeur de la répartition additive gaussienne dépendant de l'erreur de retour ($RF_j$).

**6.** Procédé selon la revendication 4 ou 5
au cours duquel, en cas d'approximation online ou en ligne du réseau neuronal (NN) en fonction d'un nombre quelconque de nouveaux vecteurs de données d'entraînement, la répartition statistique ($S_j$) est adaptée à une erreur de retour nouvellement déterminée.

**7.** Procédé selon l'une des revendications 1 à 6 utilisé pour la modélisation d'une fonction non linéaire qui est décrite avec un nombre réduit de vecteurs de données d'entraînement.

**8.** Procédé selon l'une des revendications 1 à 6 utilisé pour l'analyse d'un marché financier.

**9.** Dispositif pour la production assistée par ordinateur d'au moins un vecteur artificiel de données d'entraînement (KDTV) pour un réseau neuronal (NN)
avec une unité de calcul conçue de telle sorte

- qu'on détermine (101) une erreur résiduelle (RE) après un entraînement du réseau neuronal (NN) avec des vecteurs de données d'entraînement ($TDV_i$) d'un ensemble de données d'entraînement (TDM),
- qu'on détermine (102), à partir de l'erreur résiduelle (RE), pour au moins une entrée (j) du réseau neuronal (NN), une erreur de retour ($RF_j$),
- qu'on génère (103) une répartition statistique $S_j$, qui correspond à l'entrée (j) et qui dépend de l'importance de l'erreur de retour ($RF_j$),
- qu'on génère (104) le vecteur artificiel de données d'entraînement (KDTV) en utilisant respectivement la répartition statistique ($S_j$), qui correspond à l'entrée (j),

d'où il résulte que les vecteurs artificiels de données d'entraînement (KDTV) ont statistiquement les mêmes propriétés que les vecteurs de données d'entraînement de l'ensemble des données d'entraînement.

**10.** Dispositif selon la revendication 9
dans lequel l'unité de calcul est conçue de telle sorte que l'erreur de retour ($RF_j$) est déterminée avec un procédé à dégression des gradients.

**11.** Dispositif selon la revendication 9 ou 10
dans lequel l'unité de calcul est conçue de telle sorte que la répartition statistique ($S_j$) est formée par une répartition uniforme, une largeur de la répartition uniforme dépendant de l'erreur de retour ($RF_j$).

**12.** Dispositif selon la revendication 9 à 11
dans lequel l'unité de calcul est conçue de telle sorte que la répartition statistique ($S_j$) est formée par une répartition additive gaussienne, une largeur de la répartition additive gaussienne dépendant de l'erreur de retour ($RF_j$).

**13.** Dispositif selon la revendication 11 ou 12
dans lequel l'unité de calcul est conçue de telle sorte que, en cas d'approximation online ou en ligne du réseau neuronal (NN) en fonction d'un nombre quelconque de nouveaux vecteurs de données d'entraînement ($TDV_i$), la répartition statistique ($S_j$) est adaptée à une erreur de retour nouvellement déterminée.

**14.** Dispositif selon l'une des revendications 9 à 13 utilisé pour la modélisation d'une fonction non linéaire qui est décrite avec un nombre réduit de vecteurs de données d'entraînement.

**15.** Procédé selon l'une des revendications 9 à 13 utilisé pour l'analyse d'un marché financier.

## FIG 1

101 — Ermittlung eines Restfehlers

102 — Ermittlung eines Rückwärtsfehlers

103 — Bildung einer statistischen Verteilung für jeden Eingang abhängig von dem Rückwärtsfehler des jeweiligen Eingangs

104 — Generierung mindestens eines künstlichen Trainingsdatenvektors unter Verwendung der statistischen Verteilung

**FIG 2**